Europäisches Patentamt

European Patent Office

Office européen des brevets

(11) Publication number: **0 419 284 A1**

# EUROPEAN PATENT APPLICATION

(21) Application number: 90310374.5

(22) Date of filing: 21.09.90

(51) Int. Cl.⁵ **G01F 23/68**

(30) Priority: 21.09.89 GB 8921323

(43) Date of publication of application:
27.03.91 Bulletin 91/13

(84) Designated Contracting States:
DE FR GB IT

(71) Applicant: SPECTROL RELIANCE LIMITED
Drakes Way
Swindon Wiltshire SN3 3HY(GB)

(72) Inventor: Higgs, Roger Peter
The Old Forge, Eversley Road
Arborfield Cross Berkshire(GB)

(74) Representative: Singleton, Jeffrey et al
Eric Potter & Clarkson St. Mary's Court St.
Mary's Gate
Nottingham NG1 1LE(GB)

(54) Fluid level sensor apparatus.

(57) The invention provides sensor apparatus (1) for sensing the level (24) of a liquid in a tank (8) having a top wall (7) and a bottom wall (11). The sensor apparatus comprises a housing (2) defining a chamber (13) and mountable between said top and bottom walls (7, 11), said housing (2) being adapted to expand or contract in response to flexure of said bottom wall (11). A liquid level sensor (16) is mounted in the chamber (13) and is adapted to sense the level (24) of liquid in said chamber (13) by reference to the bottom wall (11) of the tank (8).

Fig. 1

## FLUID LEVEL SENSOR APPARATUS

This invention relates to sensor apparatus for sensing the level of a liquid in a tank, e.g., for sensing the level of liquid fuel in a motor vehicle fuel tank.

Motor vehicle fuel level detectors or sensors tend to be of two main types. In one type a float is mounted on one end of an arm the other end of which is hingedly connected at or near the top of the fuel tank and the hinge connection comprises a variable resistive element and a contact movable along the variable resistive element according to the position of the float to provide an electrical resistance proportional to the level of liquid in the tank. In the other type, as represented by U.S. Patent No.4,702,107, the fuel level sensor is provided within a cylindrical housing which depends into the fuel tank from the top thereof and which contains the fuel pump, the fuel level sensor comprising a rectangular vertically oriented insulating member having a variable resistive track extending along one side thereof and a conductive track extending along the other side thereof and a float disposed about the vertically oriented insulating member, the float containing electrical contacts which engage and electrically connect said resistive track and said conductive track at the level of the float. The upper ends of the resistive track and the conductive track are connectable to an external electric circuit so that with a DC voltage applied, the float position corresponding to the level of liquid in the tank, establishes a current path down through the portion of resistive track above the float, across the electrical contacts in the float, and up the conductive track above the float to the external electric circuit. Resistance in the current path is inversely proportional to the level of liquid in the tank.

Both of these known types of fuel level sensor sense the level of fuel in the fuel tank by reference to the top of the fuel tank. In modern motor vehicles, such as motor cars of the hatchback kind, the tendency has been towards fuel tanks of reduced height or depth and increased bottom area to facilitate packaging of the fuel tank within the confines of the vehicle. As a result there is a greater tendency for the top or bottom wall of the fuel tank to flex or bow e.g. outwards due to the weight of fuel and/or pressure within the fuel tank, which can lead to considerable inaccuracies in the level of fuel sensed when the fuel level sensor senses the level of the fuel in the tank by reference to the top of the fuel tank.

The present invention has as its object to provide sensor apparatus for sensing the level of a liquid in a tank by reference to the bottom of the tank, which is unaffected by flexure or bowing of the top or bottom of the tank and which gives a more accurate indication of liquid level than the known liquid level sensors aforesaid.

The present invention provides sensor apparatus for sensing the level of a liquid in a tank having a top wall and a bottom wall, the sensor apparatus comprising a housing defining a chamber and mountable between said top and bottom walls, said housing being adapted to expand or contract to increase or decrease the volume of said chamber in response to flexure of one of said walls, whereby to maintain said housing in engagement with said bottom wall, means communicating said member with said tank so that the liquid level in said chamber will be the same as the liquid level in said tank, and a liquid level sensor mounted in said chamber and adapted to sense the level of liquid in said chamber, and hence the level of liquid in said tank, by reference to said bottom wall.

Said housing may comprise an upper part mountable on said top wall, e.g., in an aperture therein, and a lower part for engaging said bottom wall, said parts being movable relative to one another, e.g., telescopically slidable one within the other.

Means may be provided for maintaining said lower part in engagement with said bottom wall. Such means preferably comprises a spring for resiliently urging said lower part towards said bottom wall, although other means could be used if desired such as means for securing said lower part to the bottom wall of the tank.

Said means communicating said chamber with said tank may be as described and claimed in our co-pending application No. of even data and may comprise at least one bleed aperture in said housing adjacent the lower end thereof. The at least one bleed aperture may be such that the level of liquid in said chamber is largely unaffected by surges of liquid in said tank, e.g., surges of fuel in a fuel tank of a motor vehicle due to acceleration of deceleration of the motor vehicle.

Said liquid sensor is preferably of the kind described in U.S. Patent No.4,827,769, the disclosure of which is incorporated herein by reference, and may electrically isolated conductive track, a movable float disposed about said elongate member so as to rise and fall with the level of liquid in said chamber, said float comprising interconnected electrical contacts electrically connecting said resistive track and said conductive track, and means electrically connecting said conductive track and the bottom of said resistive track to external electric circuitry, thereby facilitating a direct proportionality between magnitude of resistance and level of liquid in said chamber. Said elongate member may comprise a conductive metal substrate having a top and a bottom and having a substantial portion thereof encased in an insulating layer, said resistive track having a top and a bottom and being formed on said insulating layer, and the bottom of said substrate being electrically connected to the bottom of said resistive track, whereby said metal substrate establishes a buried conductive path to the bottom of said resistive track. Said substrate and said conductive track may be connected to said external electric circuitry by sliding contact means.

The present invention will be more particularly described with reference to the accompanying drawings, in which:-

Figure 1 is a sectional elevation of a preferred embodiment of sensor apparatus according to the invention for sensing the level of a liquid in a tank;

Figure 2 is a perspective view, partly broken away and partly in section, of a liquid level sensor used in the apparatus of Figure 1; and

Figure 3 is a top plan view of a fuel level sensor float, taken along line 3-3 of Figure 2.

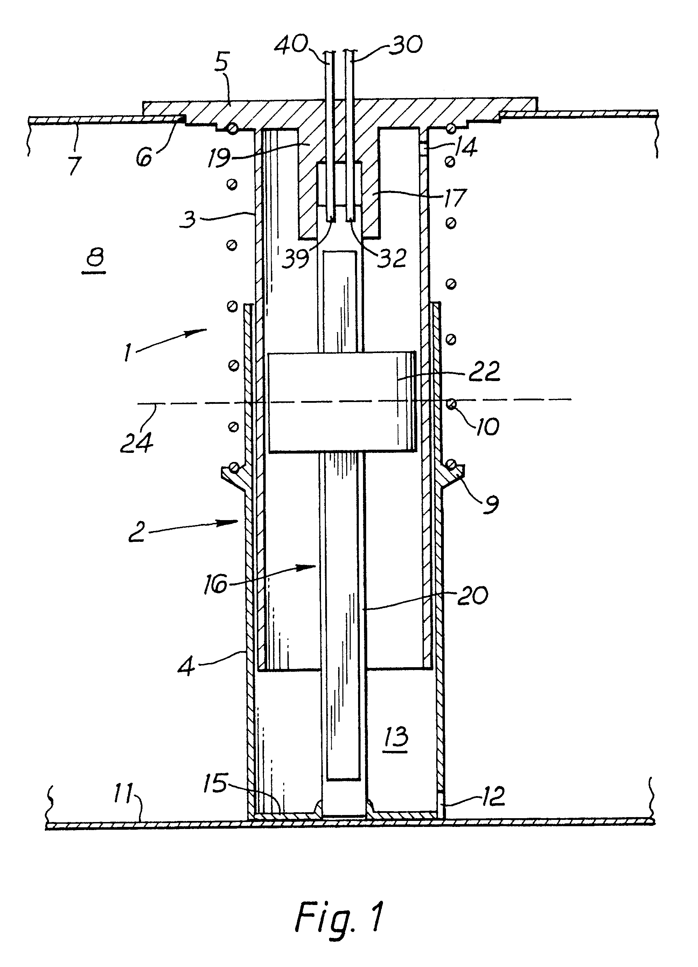

Referring to Figure 1, the fuel sensor apparatus 1 of the invention comprises a cylindrical housing 2 having an upper part 3 telescopically slidable within a lower part 4. Upper part 3 has a top cap 5 whereby it is mounted within an aperture 6 in a top wall 7 of a tank 8. Lower part 4 of the housing 2 has an outwardly directed flange 9 thereon providing an abutment for the lower end of a helical spring 10 the upper end of which abuts against the top cap 5. Spring 10 resiliently urges the lower part 4 into engagement with the bottom wall 11 of the tank 8. A bleed hole 12 communicates the chamber 13 defined by the housing 2 with the tank 8 so that the level of liquid in the chamber 13 will be the same as the level of liquid in the tank 8. A vent hole 14 may be provided adjacent the top of the upper part 3. The bleed hole 12 and vent hole 14 ensure that the level of liquid in the chamber 13 will be largely unaffected by surges of liquid in the tank 8.

Mounted within the chamber 13 is a fuel level sensor 16 comprising an elongated, rectangularly shaped, vertically oriented member 20 extending upwardly from the bottom wall 15 of the lower part 4 and a float 22 positioned around the member 20 so as to rise and fall with the level of liquid 24 in the chamber 13. The upper end of vertical member 20 is supported for sliding movement in opposed grooves (not shown) in depending arms 17 of a boss 19 extending from the underside of top cap 5.

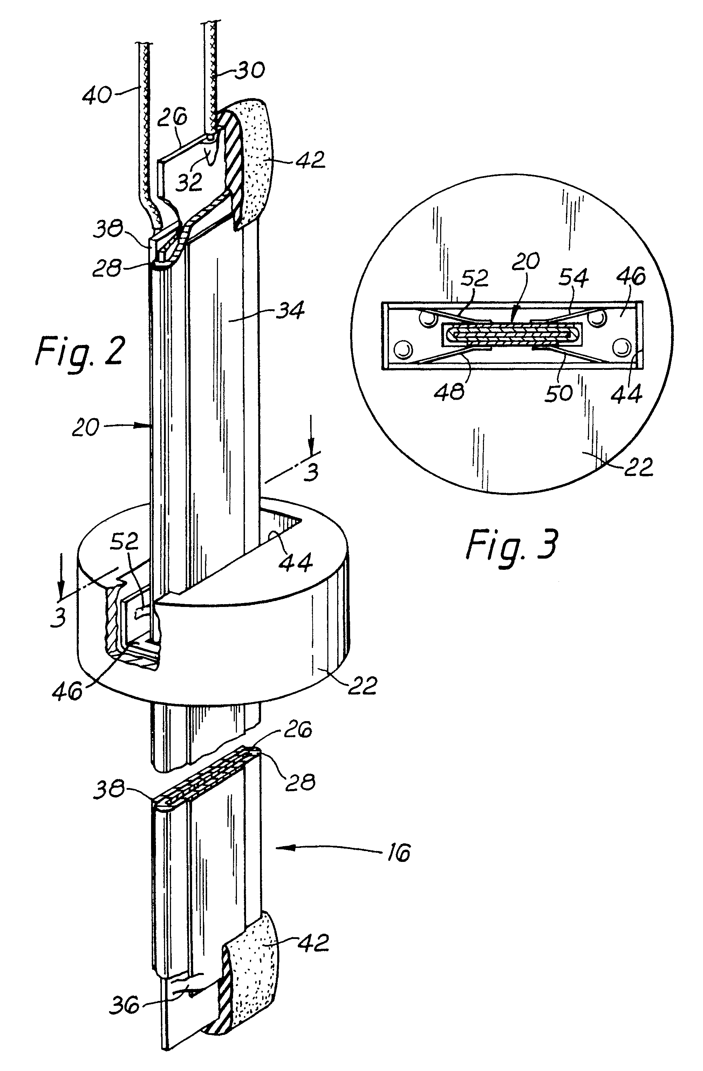

Referring now to Figure 2, the vertical member 20 comprises a soft steel substrate 26 which is encased almost entirely in porcelain 28. Though shown broken away near the bottom in Figure 2, the porcelain 28 typically extends to the bottom of substrate 26. A substrate wire 30 is attached to a top portion of the substrate via a sliding contact 32. The substrate wire 30 facilitates electrical continuity between external circuitry and the substrate 26. An oblong resistive track 24, composed of thick film cermet as is known in the art, is deposited on to the porcelain 28. A conductive nickel pad 36 deposited near the bottom of the substrate 26, attaches the substrate bottom to the bottom of the resistive track 34. The nickel pad 36 completes a current path from the substrate wire 30, down the substrate 26 to the bottom of the resistive track 34 and upward along the resistive track 34.

A side of the vertical member 20, opposite the side with the resistive track 34, contains a beryllium copper conductor 38. The conductor 38 extends from near the top of the member 20 to near the bottom and is deposited on to the porcelain 28 so that the conductor 38 is electrically isolated from the steel substrate 26 and resistive track 34. A conductor wire 40 is attached to the top of the conductor 38 via a sliding contacting 39 (Figure 1).

Top and bottom portions of the vertical member 20 may be protected by a coating of nitrile rubber 42 to prevent corrosion of the bare ends of the member 20.

The float 22, as known in the art, is typically made of foamed nylon or hollow plastics or metal. As seen in Figure 3, the float, formed in virtually any shape, has a rectangular slot 44. A contact assembly 46 is installed in the slot 44. The contact assembly 46 is stamped of tempered conductive metal, with four interconnected contacts 48, 50, 52, 54, opposed in pairs. The contact assembly 46 is heat staked or bonded in some other way to the float 22 so that the four contacts 48-54 extend into into the slot 44. When the level sensor vertical member 20 is installed between the contacts 48-54 in the slot 44, one pair of contacts 48, 50 rest against the resistive track 34 and the other pair of contacts 52, 54 rest against the beryllium copper conductor 38. The contacts, because of their interconnected nature, effect electrical continuity between the resistive track 34 and the conductor 38. Each contact exerts a force of approximately 2-20 grams on the surface on which it rests.

In use, the float 22 is buoyed at the level of the liquid 24 in the chamber 13, causing the resistive track 34 to be shorted to the conducter 38 at points approximately equal to the float level and coincident with the contacts thereon. An electric current flowing from an external circuit into the substrate wire 30, will flow down the substrate 26, across the conductive nickel pad 36 to the resistive track 34. Resistance to current flow is least at the bottom of the resistive track 34. Current will be subjected to resistance proportional to the level of liquid in th chamber 13, since current flowing up the resistive track 34 is subject to greater resistance the higher up the track it flows. As current reaches the float level it will be shorted across the contact assembly to the beryullium copper conductor 38 and routed back to the external circuit.

Since the vertical member 20 is mounted on the bottom wall 15 of the lower part 4 of the housing 2 and since the lower part 4 of housing 2 is maintained in engagement with the bottom 11 of tank 8 by means of spring 10, the liquid level 24 in the chamber 13, and hence in the tank 8, will be sensed by reference to the bottom 11 of the tank 8 whether or not there is any flexure or bowing of the top wall 7 or bottom wall 11 of the tank 8, thus providing a more accurate indication of the level of liquid in the tank 24 then would be the case if the level 24 was sensed by reference to the top wall 7 of the tank 8.

Although the invention has been shown and described with respect to an exemplary embodiment thereof, it should be understood by those skilled in the art that changes may be made therein without departing from the scope of the invention. For example, the housing 2 could be of a bellows or other suitable construction instead of the telescopic construction shown. Likewise, the sliding contacts 32, 39 could be replaced by fixed contacts and the conductors 30, 40 be flexible conductors with sufficient slack therein to accommodate movement of the vertical member 20 relative to the top cap 5.

## Claims

1. Sensor apparatus for sensing the level of a liquid in a tank (8) having a top wall (7) and a bottom wall (11), the sensor apparatus comprising a housing (2) defining a chamber (13) and mountable between said top and bottom walls, characterised in that the housing is adapted to expand or contact to increase or decrease the volume of the chamber in response to flexure of at least one of said walls (7,11), whereby to maintain the housing in engagement with the bottom wall (11), means (12) communicating the chamber with the tank so that the liquid level in the chamber will be the same as the liquid level in the tank, and a liquid level sensor (16) mounted in the chamber and adapted to sense the level of liquid in the chamber, and hence the level of liquid in said tank, by reference to the bottom wall.

2. Apparatus according to claim 1, characterised in that the housing (2) comprises an upper part (3) mountable on the top wall (7) and a lower part (4) for engaging the bottom wall (11), the upper and lower parts being movable relative to one another.

3. Apparatus according to claim 2, characterised in that the upper and lower parts (3,4) are telescopically slidable one within the other.

4. Apparatus according to claim 2 or 3, characterised in that means (10) is provided for maintaining said lower part (4) in engagement with the bottom wall (11).

5. Apparatus according to claim 4, characterised in that said means comprises a spring (10) for resiliently urging the lower part (4) towards the bottom wall (11).

6. Apparatus according to any one of the preceding claims, characterised in that the liquid level sensor (16) comprises an elongate member (20) upstanding from the bottom of the chamber (13) and having thereon a resistive track (34) and an electrically isolated conductive track (38), a movable float (22) disposed about said elongate member so as to rise and fall with the level of liquid in the chamber (13), the float comprising interconnected electrical contacts (48,50,52, 54) electrically connecting the resistive track (34) and the conductive track (38), and means (36) electrically connected the conductive track and the bottom of the resistive track to external electric circuitry, thereby facilitating a direct proportionality between the magnitude of resistance and level of liquid in the chamber.

7. Apparatus according to claim 6, characterised in that the elongate member (20) comprises a conductive metal substrate (26) having a top and bottom and having a substantial portion thereof encased in an insulating layer (28), the resistive track (14) has a top and a bottom and is formed on the insulating layer, and the bottom of the substrate is electrically connected to the bottom of the resistive track, whereby the metal substrate establishes a buried conductive path to the bottom of the resistive track.

8. Apparatus according to claim 7, characterised in that the substrate (26) and the conductive track (38) are connected to the external electric circuitry by sliding contact means (32,39).

Fig. 1

40

30

26

32

42

38

28

34

Fig. 2

20

3
3

52

44

46

22

26

28

38

16

42

36

52

20

54

46

48

50

44

22

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 578 049 (JAEGER)<br>* Page 12, lines 7-32; figures *<br>— — — | 1-5 | G 01 F 23/68 |
| A | | 6-8 | |
| X | GB-A-2 191 297 (VEGLIA BORLETTI)<br>* Figures *<br>— — — | 1-5 | |
| X | EP-A-0 275 240 (FIAT AUTO S.p.A.)<br>* Page 2, line 49 - page 3, line 65; figures 1-3 *<br>— — — | 1-5 | |
| Y | | 6-8 | |
| Y | US-A-4 827 769 (RILEY et al.)<br>* The whole document *<br>— — — — — | 6-8 | |
|  |  |  | **TECHNICAL FIELDS SEARCHED (Int. Cl.5)** |
|  |  |  | G 01 F |

The present search report has been drawn up for all claims

| Place of search | Date of completion of search | Examiner |
|---|---|---|
| The Hague | 12 December 90 | ROSE A.R.P. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document